(19) Europäisches Patentamt
European Patent Office
Office européen des brevets

(11) **EP 3 944 580 B1**

(12) **EUROPEAN PATENT SPECIFICATION**

(45) Date of publication and mention
of the grant of the patent:
**02.04.2025 Bulletin 2025/14**

(21) Application number: **20907754.4**

(22) Date of filing: **24.12.2020**

(51) International Patent Classification (IPC):
**H04L 27/26** *(2006.01)*

(52) Cooperative Patent Classification (CPC):
**H04L 27/2623**

(86) International application number:
**PCT/CN2020/139061**

(87) International publication number:
**WO 2021/129748 (01.07.2021 Gazette 2021/26)**

(54) **SYSTEM AND METHOD FOR REDUCING SIGNAL PEAK-TO-AVERAGE RATIO, AND COMPUTER-READABLE STORAGE MEDIUM**

SYSTEM UND VERFAHREN ZUR REDUZIERUNG DES SPITZENWERT-ZU-MITTELWERT-VERHÄLTNISSES UND COMPUTERLESBARES SPEICHERMEDIUM

SYSTÈME ET PROCÉDÉ PERMETTANT DE RÉDUIRE UN RAPPORT VALEUR DE CRÊTE/ VALEUR MOYENNE DE SIGNAL, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2019 CN 201911362291**

(43) Date of publication of application:
**26.01.2022 Bulletin 2022/04**

(73) Proprietor: **Sunwave Communications Co., Ltd. Hangzhou, Zhejiang 310053 (CN)**

(72) Inventors:
• **WANG, Xin**
**Hangzhou, Zhejiang 310053 (CN)**
• **CHEN, Qingsong**
**Hangzhou, Zhejiang 310053 (CN)**

• **WU, Wenquan**
**Hangzhou, Zhejiang 310053 (CN)**
• **LING, Bangxiang**
**Hangzhou, Zhejiang 310053 (CN)**

(74) Representative: **Petraz, Gilberto Luigi et al GLP S.r.l.**
**Viale Europa Unita, 171**
**33100 Udine (IT)**

(56) References cited:
**CN-A- 1 972 264        CN-A- 101 136 890
CN-A- 101 834 822      CN-A- 102 065 529
CN-A- 102 075 484      CN-A- 103 188 199
CN-A- 103 338 179      CN-A- 111 107 034
US-A1- 2004 042 559    US-A1- 2012 177 148**

## Description

### TECHNICAL FIELD

The present disclosure generally relates to the technical field of communications, and in particular, to a system and a method for reducing signal peak-to-average ratio, and a computer-readable storage medium.

### BACKGROUND

Peak Windowing Crest Factor Reduction (PW-CFR) is a mainstream algorithm to reduce signal peak-to-average ratio. A principle of the algorithm is that the original signal sequence value is compressed by a weighted rear window function near a peak value of a signal, so as to reduce the peak-to-average ratio of the signal.

CN101834822B discloses a peak value offset method based on peak value elimination, including: generating a combination peak clipping pulse by convolution of a peak value window and peak clipping filters, and carrying out the peak clipping treatment on OFDM (Orthogonal Frequency Division Multiplexing) signals by utilizing the combination peak clipping pulse. A peak value offset device is also disclosed, including a peak value window determination unit, a first peak clipping filter, a second first peak clipping filter, a first peak value offset unit and a second peak value offset unit.

A traditional PW-CFR implementation has the following two problems. The first is a realization of convolution computation relies on FIR (Finite Impulse Response) digital filter. When an order of window function is high, a large number of multiplier resources will be consumed, resulting in high implementation cost. The second is when multiple peak values appear within a length of a window function, excessive peak shaving of window functions superimposed on each other leads to a decrease of an average power and a deterioration in a performance of EVM (Error Vector Magnitude). A traditional optimization method of these problems is to use a feedback structure, however it is difficult for a feedback link to complete a calculation within a clock cycle due to a high computational complexity of the feedback link, resulting in a feedback method that is difficult to implement in practice.

### SUMMARY

The invention is set out in the appended set of claims.

The above system and method for reducing signal peak-to-average ratio, and the computer-readable storage medium have the following advantages:

the peak deviation coefficients corresponding to respective peak points and the sampling intervals between the peak points in the IQ signal are obtained; the peak deviation coefficients of the peak points in the IQ signal is modified according to the peak deviation coefficients, the sampling intervals between the peak points, and the prior peak deviation coefficient corresponding to the prior peak point in the IQ signal, and the final peak deviation coefficients are generated; the scaling coefficients corresponding to respective peak points that need to be scaled are generated according to the final peak deviation coefficients, and the scaling coefficient sequence is formed; and the IQ signal is scaled according to the scaling coefficient sequence to reduce the peak factor of the IQ signal. In the above method for reducing signal peak-to-average ratio, before the peaks in the IQ signal are scaled, a scaling effect of the peak points scaling on subsequent peak points is estimated and windowing intensities of subsequent peak points are modified. It solves a problem that generated correction coefficients superimpose on top of each other leading to excessive peak shaving when multiple peaks occur during the duration of a standard window function. In addition, the above system and method do not need a lot of multipliers and is easy to be implemented.

### BRIEF DESCRIPTION OF THE DRAWINGS

To describe and illustrate embodiments and/or examples of the present disclosure made public here better, reference may be made to one or more of the figures. The additional details or examples used to describe the figures should not be construed as limiting the scope of any of the present disclosure, the embodiments and/or examples currently described, and the best model of the present disclosure as currently understood.

FIG. 1 is a schematic diagram of a system for reducing signal peak-to-average ratio in an embodiment of the present disclosure.
FIG. 2 is a schematic diagram of a system for reducing signal peak-to-average ratio in another embodiment of the present disclosure.
FIG. 3 is a schematic diagram of a peak cancelling module in an embodiment of the present disclosure.
FIG. 4 is a principle diagram of a peak cancelling module in an embodiment of the present disclosure.
FIG. 5 is a flowchart diagram of a realization method of a peak cancelling module in an embodiment of the present disclosure.

FIG. 6 is a schematic diagram of a peak holding unit in an embodiment of the present disclosure.

FIG. 7 is a flowchart diagram of a realization of a state machine of a peak holding unit in an embodiment of the present disclosure.

FIG. 8 is a diagram of a rectangular window function and a target window function in an embodiment of the present disclosure.

FIG. 9 is a diagram of a target window function formed after a conventional peak windowing processing in an embodiment of the present disclosure.

FIG. 10 is a diagram of a target window function formed after a peak windowing processing in an embodiment of the present disclosure.

FIG. 11 is a curve diagram of a piecewise linear estimation function in an embodiment of the present disclosure.

FIG. 12 is a flowchart diagram of a method for reducing signal peak-to-average ratio in an embodiment of the present disclosure.

## DETAILED DESCRIPTION OF THE EMBODIMENTS

The present disclosure will be further described in detail below with reference to the drawings and specific embodiments, in order to better understand the objective, the technical solution and the advantage of the present disclosure. Many details are explained in the description below in order to fully understand the present disclosure, and a better way to implement the present disclosure is given in the attached figure. However, the present disclosure can be implemented in many different forms and is not limited to implementations described herein. Rather, the implementations are provided for a purpose of providing a more thorough understanding of a public content of the present disclosure. The present disclosure can be performed in many other ways other than those described herein, and similar improvements may be made by a person skilled in the art without violating the meaning of the present disclosure, so the present disclosure is not limited by specific embodiments disclosed below.

Unless otherwise defined, the technical terms or scientific terms involved in the description and claims of the present disclosure shall have the ordinary meaning as understood by the person of ordinary skill in the art to which the present disclosure belongs. The terms used herein are intended only to describe specific implementations and are not intended to limit the present disclosure. The term "and/or" as used herein includes any and all combinations of one or more related listed items.

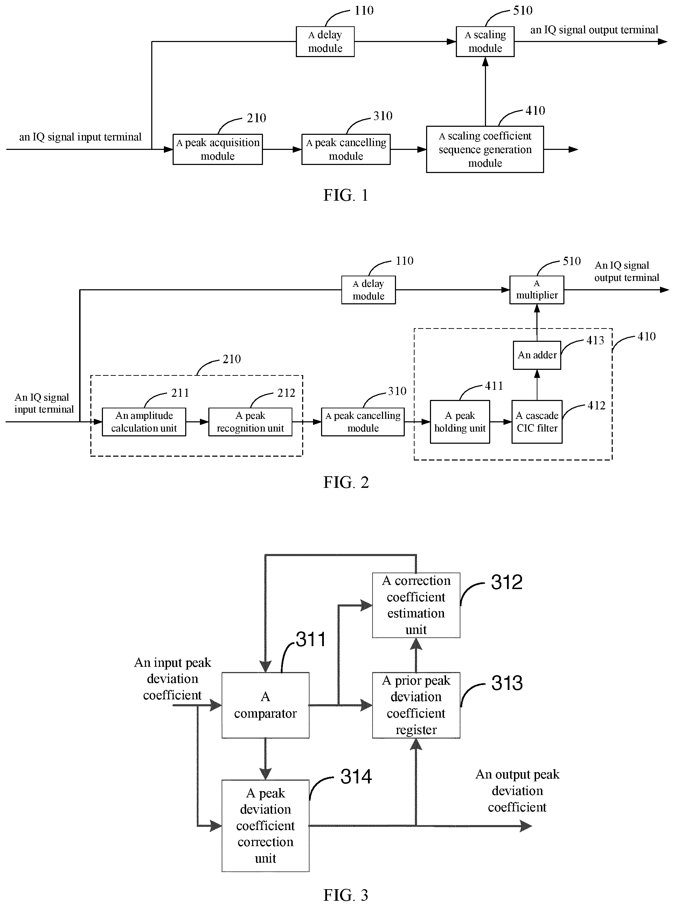

FIG. 1 is a schematic diagram of a system for reducing signal peak-to-average ratio in an embodiment of the present disclosure. The system for reducing signal peak-to-average ratio includes a delay module 110, a peak acquisition module 210, a peak cancelling module 310, a scaling coefficient sequence generation module 410 and a scaling module 510. The delay module 110 is connected with an IQ signal input terminal and configured to obtain and cache an IQ signal which is a digital baseband signal to be clipped. The delay module 110 receives and caches the IQ signal, and inputs the IQ signal to the scaling module 510 for scaling after a preset number of sampling periods of a cached IQ signal.

The peak acquisition module 210 is connected with the IQ signal input terminal. The peak acquisition module 210 is configured to obtain the IQ signal and obtain peak deviation coefficients corresponding to respective peak points and sampling intervals between the peak points according to the IQ signal.

In an embodiment of the present disclosure, as shown in FIG. 2, the peak acquisition module 210 includes an amplitude calculation unit 211 and a peak recognition unit 212. The amplitude calculation unit 211 is connected with the IQ signal input terminal, and configured to receive the IQ signal and obtain an amplitude of the IQ signal. The amplitude of the IQ signal can be obtained by a CORDIC method or using a formula: $\sqrt{I^2 + Q^2}$ .

The peak recognition unit 212 is connected with the amplitude calculation unit 211, and configured to obtain the peak points in the IQ signal, the peak deviation coefficients corresponding to respective peak points and the sampling intervals between the peak points according to the amplitude.

The peak recognition unit 212 identifies the peak points in the IQ signal and transmits the peak deviation coefficients C(n) of the peak points to the peak cancelling module 310. A judgment condition for an establishment of a peak is that the amplitude of this point is greater than a preset peak clipping threshold, and the amplitude of this point is greater than amplitudes of two adjacent sampling points. The judgment can be determined according to the following formula.

$$C(n) = \begin{cases} \dfrac{A(n) - THD}{A(n)} & (A(n) > THD, A(n) > A(n-1), A(n) > A(n+1)) \\ 0 & else \end{cases}$$

The THD represents the preset peak clipping threshold. The peak deviation coefficient reflects whether a corresponding sampling point is a peak point and represents the amplitude of the peak.

The peak cancelling module 310 is connected with the peak acquisition module 210, configured to modify the peak deviation coefficients of the peak points in the IQ signal according to the peak deviation coefficients, the sampling intervals between the peak points, and a prior peak deviation coefficient corresponding to a prior peak point in the IQ signal, and generate final peak deviation coefficients.

The prior peak point is defined as a peak point that is not cancelled after a correction by the peak cancellation module 310 and needs to be scaled by the system.

In an embodiment of the present disclosure, the modifying the peak deviation coefficients of the peak points in the IQ signal according to the peak deviation coefficients, the sampling intervals between the peak points and a prior peak deviation coefficient corresponding to a prior peak point in the IQ signal, and generating final peak deviation coefficients includes:

determining prior correction coefficients of the prior peak deviation coefficient at the peak points according to the sampling intervals between the peak points, and the prior peak deviation coefficient corresponding to the prior peak point in the IQ signal; and

modifying the peak deviation coefficients of the peak points in the IQ signal according to the peak deviation coefficients and the prior correction coefficients, and generating the final peak deviation coefficients.

In an embodiment of the present disclosure, the modifying the peak deviation coefficients of the peak points in the IQ signal according to the peak deviation coefficients and the prior correction coefficients, and generating the final peak deviation coefficients includes:

comparing the peak deviation coefficient and the prior correction coefficient;

when the peak deviation coefficient is less than or equal to the prior correction coefficient, cancelling the scaling of the peak point; and

when the peak deviation coefficient is greater than the prior correction coefficient, modifying the peak deviation coefficient according to the prior correction coefficient, and generating the final peak deviation coefficient.

For example, five peak points are in a sampling interval. When a third peak point is scaled, it can be first judged whether a window function generated by a convolution operation in generating a correction coefficient affects the amplitude of the third peak point after scaling the second peak point. If a correction coefficient of a generated window function at the third peak point is greater than the peak deviation coefficient of the third peak point, it indicates that the third peak point has been completely scaled when scaling the second peak point. In this case, the scaling of the third peak point can be cancelled to avoid excessive peak clipping. If the third peak point is partially scaled when the second peak point is scaled, for example, the amplitude of the third peak point is denoted as A, when the second peak point is scaled, the amplitude of the third peak point is scaled by B (the prior correction coefficient), and the final peak deviation coefficient of the third peak point is denoted as A-B. If the second peak has been cancelled, i.e., the scaling of the second peak point is cancelled after the scaling of the first peak point, an effect of the scaling intensity of the first peak point on the third peak point is judged accordingly. It should be noted that in an initial state, the prior peak point can be the first peak point in the IQ signal.

In an embodiment of the present disclosure, as shown in FIG. 3, the peak cancelling module 310 includes a comparator 311, a correction coefficient estimation unit 312, a prior peak deviation coefficient register 313 and a peak deviation coefficient correction unit 314. The correction coefficient estimation unit 312 includes a counter configured to estimate an effect of the prior correction coefficient on the correction coefficient at current according to the sampling intervals between the peak points and a value stored in the prior peak deviation coefficient register 313. The comparator 311 is configured to judge whether an input peak deviation coefficient is greater than an output of the correction coefficient estimation unit 312, and a comparison result is sent to the peak deviation coefficient correction unit 314 and the prior peak deviation coefficient register 313. The peak deviation coefficient correction unit 314 performs value correction or cancelling on the input deviation coefficient according to an output result of the comparator 311, and outputs a performing result to a peak holding unit 411. The cancelling means that the peak deviation coefficient is rewritten to 0, and a scaling coefficient sequence generation module 410 no longer adds a window to the peak. The prior peak deviation coefficient register 313 decides whether to load an output peak deviation coefficient according to the result of the comparator 311. The prior peak point is an uncancelled peak point from a last output at the input time of the peak deviation coefficient at current to the scaling coefficient sequence generation module 410.

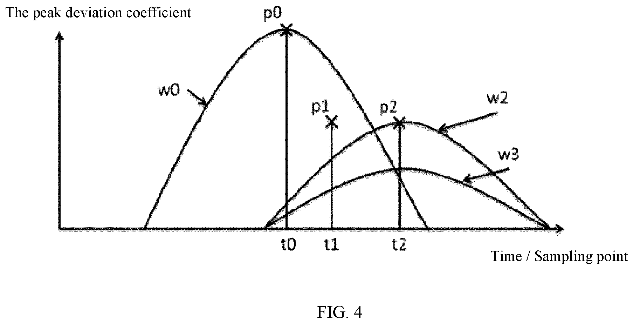

An operating principle of the peak cancelling module 310 is shown in FIG. 4. It is assumed that the prior peak point is at a sampling point t0, and the peak deviation coefficient of this peak point is denoted as p0. The window function generated at t0 should be denoted as w0(n) ignoring possible influence of other peak points. Obviously, if other peak points appear near t0, the correction coefficient sequence finally generated according to a calculation process of non-negative convolution is denoted as w(n), w(n) >= w0(n). Therefore, w0 can be used as a conservative estimation of the correction coefficient sequence within duration range. During the subsequent duration of w0, the peak deviation coefficient of sampling point t1 is assumed to be denoted as p1 when a peak point is at the sampling point t1. If w0(t1) >= p1, it means that a contribution of the window function w0 to the correction coefficient has completed an amplitude correction of a peak p1, and a window for the peak point at this moment is no need to add, so the window for the peak p1 can be cancelled. When a peak p2 appears at a time t2, as shown in FIG. 4, the amplitude of the peak deviation coefficient p2 is greater than w0(t2). Therefore, the window function w0(t2) cannot independently complete the correction of peak value at the time t2, and the window function at the amplitude of p2 of w2 is retained. At this time, the window function w2 is used instead of w0 to evaluate whether the subsequent peak windowing can be cancelled during a duration of the window function w2. In an application scenario where a generation process of the correction coefficient is a pure convolution calculation, w2 can be replaced by w3, and w3 represents a window function centered at t2 with a height of p2- w0(t2). The amplitude correction of window functions of all subsequent peaks can be realized by using the above method for iterative calculation.

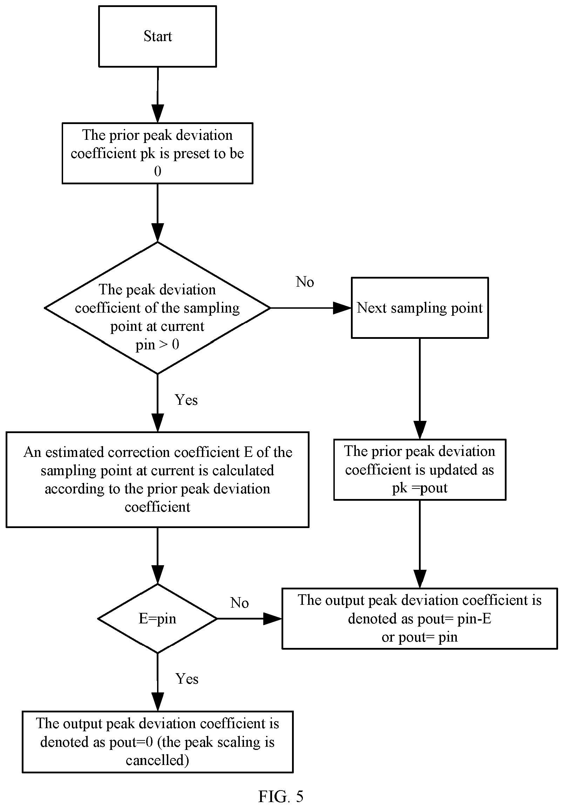

A specific implementation method of the peak cancelling module 310 provided in the embodiment is shown in FIG. 5. Firstly, the peak deviation coefficient pk of the prior peak point is preset to be 0. A known peak value 0 is assumed at a sampling point p0, and it is determined whether the peak deviation coefficient pin of the peak value 0 is greater than 0. If yes, the correction coefficient estimation unit calculates an estimated correction coefficient E (the prior correction coefficient) of the sampling point at current according to the prior peak deviation coefficient and the sampling intervals. If the estimated correction coefficient E is greater than or equal to the peak deviation coefficient pin of the peak value 0, it indicates that the estimated correction coefficient E can be used to scale the peak value of the sampling point at current. At this point, the output peak deviation coefficient (the final peak deviation coefficient) is denoted as pout, pout=0, i.e., the peak scaling of the sampling point is cancelled. If the estimated correction coefficient E is less than the peak deviation coefficient pin of the peak value 0, the output peak deviation coefficient is denoted as pout, pout= pin-E. If the peak deviation coefficient pin of the peak value 0 is not greater than 0, the next sampling point is sampled, and the prior peak deviation coefficient is updated as pk= pout, and the final peak deviation coefficient is denoted as pout= pin.

In an embodiment, the peak cancelling module can use an estimation window function to determine the peak points that need to be scaled in the IQ signal. The estimation window function can be understood as a series of coefficients generated by the system to represent need for amplitude correction near a certain peak point when no other peaks are in a length range of positive and negative window functions at the certain peak point. Specifically, the estimation window function can be obtained by the following way. A standard window function is defined as a window function with a maximum value of 1, which is symmetric about a sampling sequence 0, denoted as $W(n)$, then the estimated window function generated at the peak point at the sampling point $t$ can be denoted as $h*W(n-t)$, and $h$ represents the peak deviation coefficient of the peak point. A shape of the standard window function is preset, such as Caesar window and Hamming window, which are commonly used in communication system, and can also be generated by a specific algorithm.

After the peak point is detected, the estimation window function is generated according to the standard window function and the peak deviation coefficient. Then, other peak points within the subsequent duration of the estimated window function (a duration of half the window function) are obtained according to the sampling intervals of the peak points, and other peak points are all behind the peak point corresponding to the estimated window function. A height of the estimated window function is compared with the amplitude of other peak points, if a peak point whose amplitude is less than or equal to the height of the estimated window function exists, the scaling of the peak point is cancelled. If a peak point whose amplitude is greater than the height of the estimated window function exists, a scaling effect of the peak point corresponding to the estimated window function on the subsequent peak points is estimated and windowing intensities of the subsequent peak points are corrected.

In an embodiment, the peak cancelling module 310 includes a memory configured to store the standard window function. The general physical implementation of PW-CFR is in a field programmable logic array, an Application Specific Integrated Circuit, or a digital signal processor, so the memory here can correspond to a RAM or memory resources. The memory can also be simply replaced with a lookup table, and the standard window function is directly obtained by traversing the lookup table.

The scaling coefficient sequence generation module 410 is connected with the peak cancelling module 310, and is configured to generate scaling coefficients corresponding to respective peak points in the IQ signal that need to be scaled according to the final peak deviation coefficients and form a scaling coefficient sequence.

In an embodiment, the scaling coefficient sequence generation module 410 includes a peak holding unit 411, a cascade CIC filter 412 and an adder 413. The peak holding unit 411 is connected with the peak cancelling module 310 and configured to generate a rectangular window function for the peak points that need to be scaled in the IQ signal according to the final peak deviation coefficients.

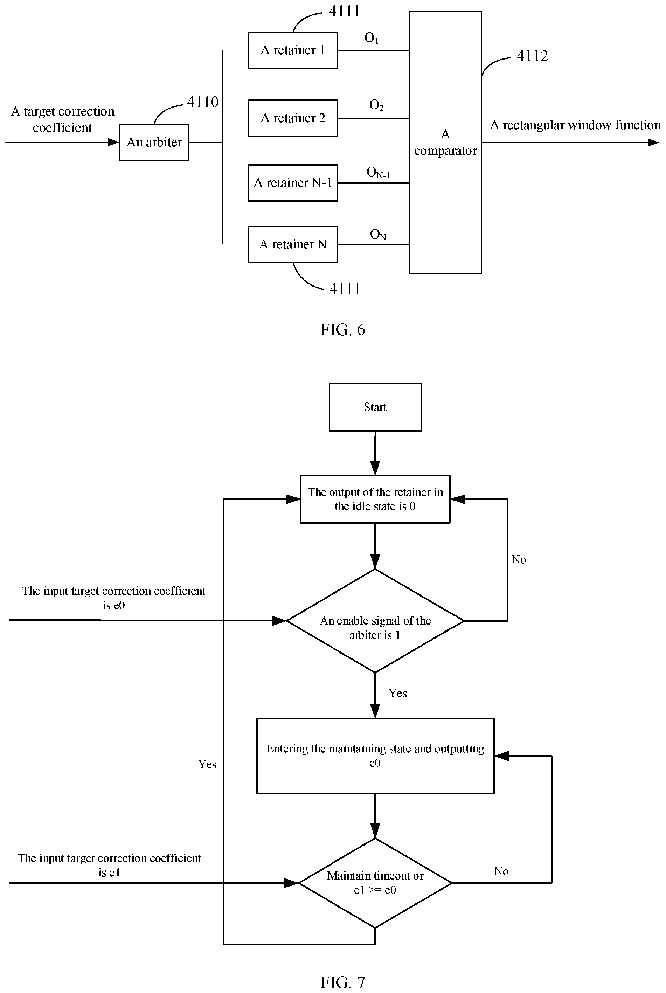

In an embodiment, as shown in FIG. 6, the peak holding unit 411 includes an arbiter 4110, a plurality of retainers 4111 connected with the arbiter 4110 and a comparator 4112 connected with the plurality of retainers 4111.

The arbiter 4110 is configured to read operating states of respective retainers 4111 when receiving the final peak deviation coefficient of the peak point that needs to be scaled, and distribute the final peak deviation coefficient to one of the retainers 4111 in an idle state currently; the operating state includes a maintaining state and an idle state.

The retainer 4111 is configured to receive the final peak deviation coefficient to enter the maintain state, and output a received final peak deviation coefficient continuously to generate a rectangular window in a maintaining state.

A realization of a state machine of the peak holding unit 411 is shown in FIG. 7. The arbiter 4110 reads state indication signals of respective retainers 4111 and distributes the final peak deviation coefficient to one of the retainers 4111 in an idle state. Meanwhile, the final peak deviation coefficient at current is multiplexed to respective retainers 4111. The retainer 4111 has two operating states including the maintaining state and the idle state. The output of the retainer 4111 in the maintaining state will be retained as the final peak deviation coefficient when entering the maintaining state, and the output of the retainer 4111 in the idle state is 0. When the retainer 4111 in the idle state receives an enable signal sent by the arbiter 4110, the retainer 4111 enters the maintaining state. When the retainer 4111 is in the maintaining state, two conditions can change the retainer 4111 to return to the idle state respectively. One condition is that a preset maintain time is passed, and the other one condition is that when the final peak deviation coefficient sent by the arbiter 4110 is greater than the correction coefficient maintained retained at current. Maintain timeout means that the maintain state is held for a sampling length $L_h=(L_{window}+1)/2$, and $L_{window}$ is a length of the standard window function.

The comparator 4112 is configured to receive rectangular windows output by respective retainers 4111 and generate the rectangular window function according to a maximum value of multiple rectangular windows.

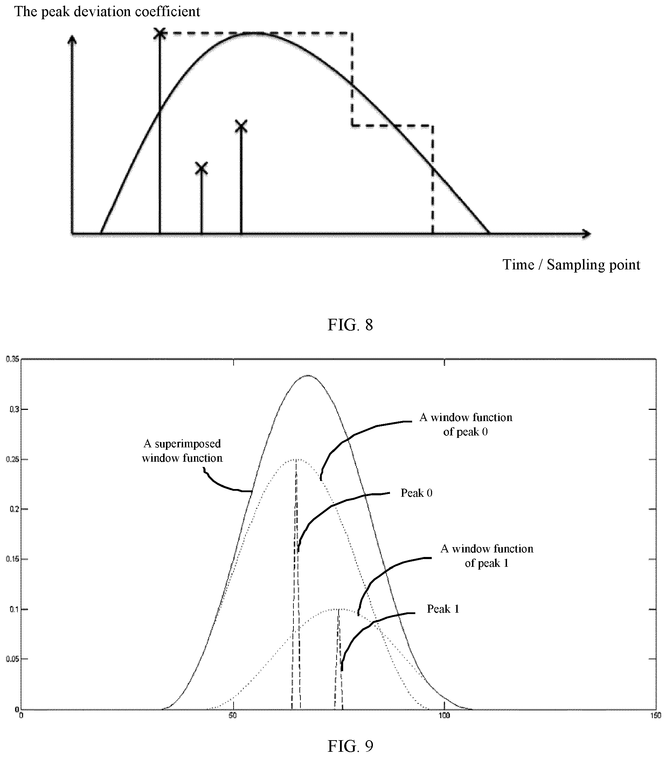

The comparator 4112 is configured to compare outputs of all retainers 4111 and output the maximum value, i.e., the output of the comparator 4112 can be denoted as $O=Max(O_1, O_2, O_3, ... , O_{N-1}, O_N)$, and the rectangular window function is generated as shown the dotted line in FIG. 8.

The cascade CIC filter 412 is connected with the peak holding unit 411, configured to shape the rectangular window function into a target window function and generate a correction coefficient sequence according to the target window function.

The cascade CIC filter 412 shapes the rectangular window function into the target window function, as shown in FIG. 8. An output of the cascade CIC filter unit 412 represents the final correction coefficient. The cascade CIC filter unit 412 meets the following conditions: tap coefficients of respective levels of the cascade CIC filter unit 412 are assumed as $N_0$, $N_1$, ... , $N_i$, and the tap coefficients of respective levels of the CIC filter should meet:

$$\sum_{n=0}^{i} N(n) - i = \frac{L_{window}+1}{2}$$

, and $L_{window}$ is the length of the standard window function. Spectrum characteristics and performance of PW-CFR can be adjusted by adjusting a number of the levels of the CIC filter and a number of tap coefficients at respective levels, so as to meet different application scenarios and requirements.

The adder 413 is connected with the cascade CIC filter 412, configured to transform the correction coefficient sequence into the scaling coefficient sequence.

The scaling module 510 is connected with the delay module 110, the scaling coefficient sequence generation module 410, and an IQ signal output terminal respectively, and configured to scale the IQ signal according to the scaling coefficient sequence to reduce a peak factor of the IQ signal. As shown in FIG. 2, the scaling module 510 is a multiplier.

After obtaining the scaling coefficient sequence, the scaling module 510 scales the IQ signal cached by the delay module 110 according to the scaling coefficient sequence to reduce the peak factor of the IQ signal.

Specifically, Scaling factor = 1- Correction factor. Conventional peak windowing method windows respective recognized peak. When a distance between two peaks is less than half of a window width, the window functions generated by the convolution operation are superimposed on each other, resulting in excessive reduction of the amplitude of the two peaks, thus causing the deterioration of EVM and ACPR parameters, as shown in FIG. 9:

the ordinate is the peak deviation coefficient (a percentage of reducing the IQ signal), the abscissa is a serial number of the sampling point, and a window function is generated at every peak point. A peak amplitude can be scaled to the threshold as long as the height of the window function is equal to the peak deviation coefficient at the peak point, and the target window function is the window function formed by the superposition of two window functions. It can be seen that the final target window function (the superimposed window function) is significantly higher than the estimated window function, so the peak is too clipped at the first peak point.

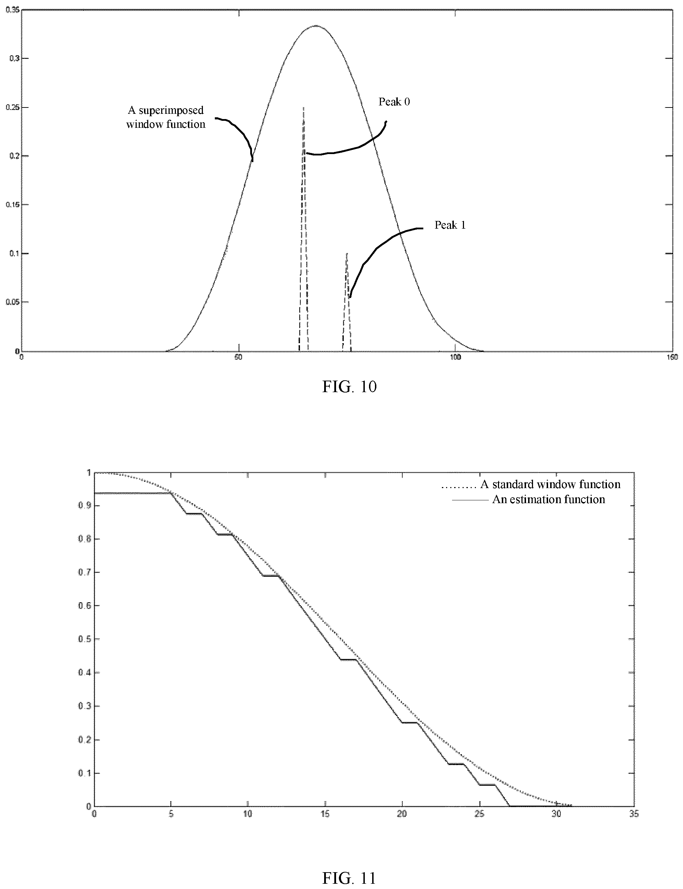

In the present disclosure, the scaling effect of a peak point after windowing on subsequent peak points can be estimated quickly and the windowing intensities of subsequent peak points can be corrected through the peak cancelling module 310, so as to improve a situation of excessive compression of peak points. For example, in the above embodiments, the window function generated by the first peak, i.e., peak 0, modifies the amplitude around the second peak, i.e., peak 1, and a correction ratio is greater than the correction coefficient required by the peak 1, so the scaling of the peak 1 can be cancelled, as shown in FIG. 10. The target window function can scale the peak amplitude to the peak clipping threshold without excessive clipping.

In the above implementation schemes, an estimated value of the correction coefficient at current is calculated via the deviation coefficient of the prior peak point and the sampling interval d between the sampling point at current and a sampling prior peak point, i.e., E = Pk * Es(d). Es represents an estimation function, Es(n) should satisfy Es(n) ≤W(n) in order to ensure that no amplitude higher than a threshold point in the system after peak clipping exists. W(n) represents the standard window function, i.e., a system window function whose height is 1 and whose center of symmetry is 0 generated by the system.

In an embodiment, the estimate value of the correction coefficient can be acquired by a lookup table and multiplication. A result of Es(n) is pre-calculated and stored in the lookup table, and the interval between a pre-sampling point and the sampling prior peak point is used as an address for table lookup. Finally, an output of the lookup table is multiplied by the deviation coefficient of the prior peak point to obtain the estimated value of the correction coefficient.

A compromise between performance and computational complexity can be achieved through the estimation function Es. For example, in an embodiment, calculations can be performed through counters and adders only and no longer depending on the multiplier by a linear estimation function, specifically when a slope of a linear part is $1/2^n$. FIG. 11 is a curve diagram of a piecewise linear estimation function in an embodiment of the present disclosure. The method can be used to calculate the estimated value of the correction coefficient in an iterative manner without multiplication.

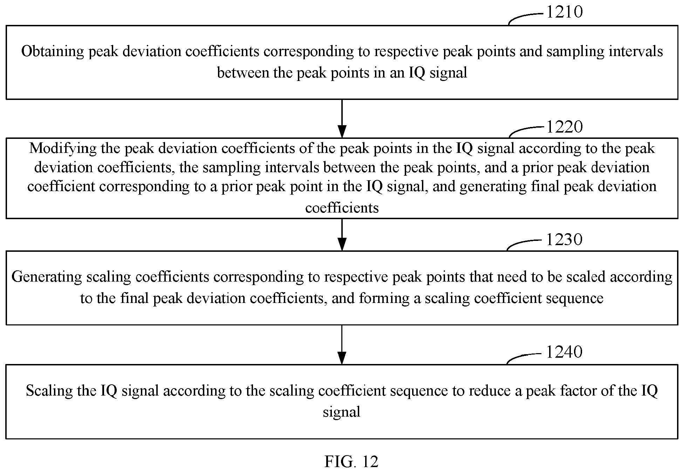

FIG. 12 is a flowchart diagram of a method for reducing signal peak-to-average ratio in an embodiment of the present disclosure. The method for reducing signal peak-to-average ratio includes step 1210 to step 1240:

at step 1210, obtaining peak deviation coefficients corresponding to respective peak points and sampling intervals between the peak points in an IQ signal;

at step 1220, modifying the peak deviation coefficients of the peak points in the IQ signal according to the peak deviation coefficients, the sampling intervals between the peak points, and a prior peak deviation coefficient corresponding to a prior peak point in the IQ signal, and generating final peak deviation coefficients;

at step 1230, generating scaling coefficients corresponding to respective peak points that need to be scaled according to the final peak deviation coefficients, and forming a scaling coefficient sequence;

at step 1240, scaling the IQ signal according to the scaling coefficient sequence to reduce a peak factor of the IQ signal.

In an embodiment, the modifying the peak deviation coefficients of the peak points in the IQ signal according to the peak deviation coefficients, the sampling intervals between the peak points, and a prior peak deviation coefficient corresponding to a prior peak point in the IQ signal, and generating final peak deviation coefficients includes:

determining prior correction coefficients of the prior peak deviation coefficient at the peak points according to the sampling intervals between the peak points, and the prior peak deviation coefficient corresponding to the prior peak point in the IQ signal; and

modifying the peak deviation coefficients of the peak points in the IQ signal according to the peak deviation coefficients and the prior correction coefficients, and generating the final peak deviation coefficients.

In an embodiment, the modifying the peak deviation coefficients of the peak points in the IQ signal according to the peak deviation coefficients and the prior correction coefficients, and generating the final peak deviation coefficients includes:

comparing the peak deviation coefficient and the prior correction coefficient;

when the peak deviation coefficient is less than or equal to the prior correction coefficient, cancelling the scaling of the peak point; and

when the peak deviation coefficient is greater than the prior correction coefficient, modifying the peak deviation coefficient according to the prior correction coefficient, and generating the final peak deviation coefficient.

In an embodiment, the generating scaling coefficients corresponding to respective peak points that need to be scaled according to the final peak deviation coefficient, and forming a scaling coefficient sequence includes:

generating a rectangular window function for the IQ signal that needs to be scaled according to the final peak deviation coefficients;

shaping the rectangular window function into a target window function, and generating a correction coefficient sequence according to the target window function; and

transforming the correction coefficient sequence into the scaling coefficient sequence.

In an embodiment of the present disclosure, the generating a rectangular window function for the IQ signal that needs to be scaled according to the final peak deviation coefficients includes:

reading operating states of respective retainers when receiving the final peak deviation coefficient of the peak point that needs to be scaled, and distributing the final peak deviation coefficient to one of the retainers in an idle state currently, the operating state including a maintaining state and an idle state;

receiving, by the retainer, the final peak deviation coefficient to enter the maintain state, and outputting a received final peak deviation coefficient continuously to generate a rectangular window in a maintaining state; and

receiving rectangular windows output by respective retainers by a comparator, and generating the rectangular window function according to a maximum value of multiple rectangular windows.

A specific qualification of the method for reducing the signal peak-to-average ratio can be found in the above qualification of the system for reducing the signal peak-to-average ratio, which will not be described here.

The method for reducing the signal peak-to-average ratio provided in the present disclosure includes: the peak deviation coefficients corresponding to respective peak points and the sampling intervals between the peak points in an IQ signal are obtained; the peak deviation coefficients of the peak points in the IQ signal is modified according to the peak deviation coefficients, the sampling intervals between the peak points, and the prior peak deviation coefficient corresponding to the prior peak point in the IQ signal, and the final peak deviation coefficients are generated; the scaling coefficients corresponding to respective peak points that need to be scaled are generated according to the final peak deviation coefficients, and the scaling coefficient sequence is formed; and the IQ signal is scaled according to the scaling coefficient sequence to reduce the peak factor of the IQ signal. In the above method for reducing signal peak-to-average ratio, before the peaks in the IQ signal are scaled, a scaling effect of the peak points scaling on subsequent peak points is estimated and the windowing intensities of subsequent peak points are modified. It solves a problem that generated correction coefficients superimpose on top of each other leading to excessive peak shaving when multiple peaks occur during the duration of a standard window function. In addition, the above method does not need a lot of multipliers and is easy to be implemented.

It should be understood that although the steps in the flowchart diagram in FIG. 12 are shown in sequence as indicated by arrows, the steps are not necessarily executed in the order indicated by the arrows. Unless explicitly stated in the present disclosure, there is no strict order in which the steps can be performed, and the steps can be performed in any other order. In addition, at least a part of the steps in FIG. 12 can include multiple sub-steps or stages. The sub-steps or the stages are not necessarily executed at the same time, but can be executed at different times. An execution sequence of the sub-steps or the stages is not necessarily sequential. The sub-steps or the stages may be performed alternately or in turn with other steps or at least a part of a substep or phase of other steps.

In an embodiment of the present disclosure, a computer readable storage medium is provided. The computer readable storage medium has stored a computer program thereon, and the following steps are performed when the computer program is executed by a processor:

obtaining peak deviation coefficients corresponding to respective peak points and sampling intervals between peak points in an IQ signal;

modifying the peak deviation coefficients of the peak points in the IQ signal according to the peak deviation coefficients, the sampling intervals between the peak points, and a prior peak deviation coefficient corresponding to a prior peak point in the IQ signal, and generating final peak deviation coefficients;

generating scaling coefficients corresponding to respective peak points that need to be scaled according to the final peak deviation coefficients, and forming a scaling coefficient sequence; and

scaling the IQ signal according to the scaling coefficient sequence to reduce a peak factor of the IQ signal.

A person skilled in the art can understand that all or part of the process in the method of the above embodiment can be accomplished by instructing the associated hardware by a computer program, which may be stored in a non-volatile computer readable storage medium. The computer program may include the process of each method in the above embodiments when executed. Any reference to a memory, a database or other medium used in each embodiment provided by the present disclosure may include at least one of a non-volatile memory and a volatile memory. The non-volatile memory may include a Read-Only Memory (ROM), a programmable ROM (PROM), an electrically programmable ROM (EPROM), an electrically erasable programmable ROM (EEPROM), or a flash memory. The volatile memory may include a Random Access Memory (RAM) or an external cache memory. As an illustration rather than a limitation, the RAM is available in a variety of forms, such as a Static Random Access Memory (SRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a Synchronous Link Dynamic Random Access Memory (SLDRAM), a Rambus Direct Random Access Memory (RDRAM), a Direct Rambus Dynamic Random Access Memory (DRDRAM), a Rambus Dynamic Random Access Memory (RDRAM), etc.

**Claims**

1.  A system for reducing a signal peak-to-average ratio, comprising:

    a delay module (110) connected with an IQ signal input terminal and configured to obtain and cache an IQ signal which is a digital baseband signal;
    a peak acquisition module (210) connected with the IQ signal input terminal and configured to obtain the IQ signal and obtain peak deviation coefficients corresponding to respective peak points and sampling intervals between the peak points according to the IQ signal;
    a peak cancelling module (310) connected with the peak acquisition module (210) and configured for determining a prior correction coefficient of a prior peak deviation coefficient at a current peak point according to a sampling interval between a prior peak point and the current peak point, and the prior peak deviation coefficient corresponding to the prior peak point in the IQ signal; modifying a peak deviation coefficient of the current peak point in the IQ signal according to the peak deviation coefficient of the current peak point and the prior correction coefficient, and generating a final peak deviation coefficient of the current peak point, wherein final peak deviation coefficients of the peak points are generated one by one;
    wherein
    modifying the peak deviation coefficient of the current peak point in the IQ signal according to the peak deviation coefficient of the current peak point and the prior correction coefficient, and generating the final peak deviation coefficient of the current peak point further comprises:

    comparing the peak deviation coefficient of the current peak point and the prior correction coefficient;
    when the peak deviation coefficient of the current peak point is less than or equal to the prior correction coefficient, cancelling a scaling of the current peak point; and
    when the peak deviation coefficient of the current peak point is greater than the prior correction coefficient, modifying the peak deviation coefficient according to the prior correction coefficient, and generating the final peak deviation coefficient;
    a scaling coefficient sequence generation module (410) connected with the peak cancelling module (310) and configured to generate scaling coefficients corresponding to respective peak points that need to be scaled according to the final peak deviation coefficients, and form a scaling coefficient sequence; and
    a scaling module (510) connected with the delay module (110), the scaling coefficient sequence generation module (410) and an IQ signal output terminal respectively, and configured to scale the IQ signal according to the scaling coefficient sequence to reduce a peak factor of the IQ signal.

2.  The system of claim 1, wherein the peak acquisition module (210) comprises:

    an amplitude calculation unit (211) connected with the IQ signal input terminal and configured to receive the IQ signal and obtain an amplitude of the IQ signal; and
    a peak recognition unit (212) connected with the amplitude calculation unit (211) and configured to obtain the peak deviation coefficients corresponding to respective peak points and the sampling intervals between the peak points according to the amplitude.

3.  The system of claim 1, wherein the scaling coefficient sequence generation module (410) comprises:

    a peak holding unit (411) connected with the peak cancelling module (310) and configured to generate a rectangular window function for the peak points that need to be scaled in the IQ signal according to the final peak deviation coefficients;
    a cascade CIC filter (412) connected with the peak holding unit (411) and configured to shape the rectangular window function into a target window function, obtain correction coefficients corresponding to respective peak points according to the target window function, and form a correction coefficient sequence; and
    an adder (413) connected with the cascade CIC filter (412) and configured to transform the correction coefficient sequence into the scaling coefficient sequence.

4.  The system of claim 3, wherein the peak holding unit (411) comprises an arbiter (4110), a plurality of retainers (4111) connected with the arbiter (4110) and a comparator (4112) connected with the plurality of retainers (4111);

    the arbiter (4110) is configured to read operating states of respective retainers (4111) when receiving the final peak deviation coefficient of the peak point that needs to be scaled, and distribute the final peak deviation coefficient to one of the retainers (4111) in an idle state currently; the operating state comprises a maintaining state and an idle state;

the retainer (4111) is configured to receive the final peak deviation coefficient to enter the maintain state, and output a received final peak deviation coefficient continuously to generate a rectangular window in a maintaining state; and

the comparator (4112) is configured to receive rectangular windows output by respective retainers (4111), and generate the rectangular window function according to a maximum value of multiple rectangular windows.

5. A method for reducing a signal peak-to-average ratio, comprising:

obtaining peak deviation coefficients corresponding to respective peak points and sampling intervals between the peak points in an IQ signal;

determining a prior correction coefficient of a prior peak deviation coefficient at a current peak point according to a sampling interval between a prior peak point and the current peak point, and the prior peak deviation coefficient corresponding to the prior peak point in the IQ signal; modifying a peak deviation coefficient of the current peak point in the IQ signal according to the peak deviation coefficient of the current peak point and the prior correction coefficient, and generating a final peak deviation coefficient of the current peak point, wherein final peak deviation coefficients of the peak points are generated one by one; wherein

modifying the peak deviation coefficient of the current peak point in the IQ signal according to the peak deviation coefficient of the current peak point and the prior correction coefficient, and generating the final peak deviation coefficient of the current peak point further comprises:

comparing the peak deviation coefficient of the current peak point and the prior correction coefficient;

when the peak deviation coefficient of the current peak point is less than or equal to the prior correction coefficient, cancelling a scaling of the current peak point; and

when the peak deviation coefficient of the current peak point is greater than the prior correction coefficient, modifying the peak deviation coefficient according to the prior correction coefficient, and generating the final peak deviation coefficient;

generating scaling coefficients corresponding to respective peak points that need to be scaled according to the final peak deviation coefficients, and forming a scaling coefficient sequence; and

scaling the IQ signal according to the scaling coefficient sequence to reduce a peak factor of the IQ signal.

6. The method of claim 5, wherein the generating scaling coefficients corresponding to respective peak points that need to be scaled according to the final peak deviation coefficients, and forming a scaling coefficient sequence comprises:

generating a rectangular window function for the respective peak points that need to be scaled according to the final peak deviation coefficients;

shaping the rectangular window function into a target window function, and generating a correction coefficient sequence according to the target window function; and

transforming the correction coefficient sequence into the scaling coefficient sequence.

7. The method of claim 6, wherein the generating a rectangular window function for the IQ signal that needs to be scaled according to the final peak deviation coefficients comprises:

reading operating states of respective retainers when receiving the final peak deviation coefficient of the peak point that needs to be scaled, and distributing the final peak deviation coefficient to one of the retainers in an idle state currently, the operating state comprising a maintaining state and an idle state;

receiving, by the retainer, the final peak deviation coefficient to enter the maintain state, and outputting a received final peak deviation coefficient continuously to generate a rectangular window in a maintaining state; and

receiving rectangular windows output by respective retainers by a comparator, and generating the rectangular window function according to a maximum value of multiple rectangular windows.

8. A computer-readable storage medium having stored a computer program, **characterized in that** the computer program is executed by a processor to implement steps of the method of any one of claims 5 to 7.

**Patentansprüche**

1.  System zur Reduzierung eines Signalspitzenwert-zu-Mittelwert-Verhältnisses, umfassend:

    ein Verzögerungsmodul (110), das mit einem IQ-Signal-Eingabeendgerät verbunden ist und dazu konfiguriert ist, ein IQ-Signal zu erhalten und zu cachen, das ein digitales Basisbandsignal ist;
    ein Spitzenwerterfassungsmodul (210), das mit dem IQ-Signal-Eingabeendgerät verbunden ist und dazu konfiguriert ist, das IQ-Signal zu erhalten und Spitzenwertabweichungskoeffizienten zu erhalten, die jeweiligen Spitzenpunkten und Abtastintervallen zwischen den Spitzenpunkten gemäß dem IQ-Signal entsprechen;
    ein Spitzenlöschungsmodul (310), das mit dem Spitzenwerterfassungsmodul (210) verbunden ist und dazu konfiguriert ist, einen vorherigen Korrekturkoeffizienten eines vorherigen Spitzenwertabweichungskoeffizienten bei einem aktuellen Spitzenpunkt gemäß einem Abtastintervall zwischen einem vorherigen Spitzenpunkt und dem aktuellen Spitzenpunkt zu bestimmen, und wobei der vorherige Spitzenwertabweichungskoeffizient dem vorherigen Spitzenpunkt im IQ-Signal entspricht; einen Spitzenwertabweichungskoeffizienten des aktuellen Spitzenpunktes im IQ-Signal gemäß dem Spitzenwertabweichungskoeffizienten des aktuellen Spitzenpunktes und dem vorherigen Korrekturkoeffizienten zu ändern, und einen endgültigen Spitzenwertabweichungskoeffizienten des aktuellen Spitzenpunktes zu erzeugen, worin endgültige Spitzenwertabweichungskoeffizienten der Spitzenpunkte einer nach dem anderen erzeugt werden;
    worin das Ändern des Spitzenwertabweichungskoeffizienten des aktuellen Spitzenpunktes im IQ-Signal gemäß dem Spitzenwertabweichungskoeffizienten des aktuellen Spitzenpunktes und dem vorherigen Korrekturkoeffizienten, und das Erzeugen des endgültigen Spitzenwertabweichungskoeffizienten des aktuellen Spitzenpunktes ferner umfasst:

    Vergleichen des Spitzenwertabweichungskoeffizienten des aktuellen Spitzenpunktes und des vorherigen Korrekturkoeffizienten;
    wenn der Spitzenwertabweichungskoeffizient des aktuellen Spitzenpunktes kleiner als oder gleich wie der vorherige Korrekturkoeffizient ist, Löschen eines Skalierens des aktuellen Spitzenpunktes; und
    wenn der Spitzenwertabweichungskoeffizient des aktuellen Spitzenpunktes größer als der vorherige Korrekturkoeffizient ist, Ändern des Spitzenwertabweichungskoeffizienten gemäß dem vorherigen Korrekturkoeffizienten, und Erzeugen des endgültigen Spitzenwertabweichungskoeffizienten;
    ein Skalierungskoeffizientensequenz-Erzeugungsmodul (410), das mit dem Spitzenlöschungsmodul (310) verbunden ist und dazu konfiguriert ist, Skalierungskoeffizienten zu erzeugen, die jeweiligen Spitzenpunkten entsprechen, die gemäß den endgültigen Spitzenwertabweichungskoeffizienten skaliert werden müssen, und eine Skalierungskoeffizientensequenz zu bilden; und
    ein Skalierungsmodul (510), das jeweils mit dem Verzögerungsmodul (110), dem Skalierungskoeffizientensequenz-Erzeugungsmodul (410) und einem IQ-Signalausgabeendgerät verbunden ist, und dazu konfiguriert ist, das IQ-Signal gemäß der Skalierungskoeffizientensequenz zu skalieren, um einen Spitzenfaktor des IQ-Signals zu reduzieren.

2.  System nach Anspruch 1, worin das Spitzenwerterfassungsmodul (210) umfasst:

    eine Amplitudenberechnungseinheit (211), die mit dem IQ-Signal-Eingabeendgerät verbunden ist und dazu konfiguriert ist, das IQ-Signal zu erhalten und eine Amplitude des IQ-Signals zu erhalten; und
    eine Spitzenerkennungseinheit (212), die mit der Amplitudenberechnungseinheit (211) verbunden ist und dazu konfiguriert ist, die Spitzenwertabweichungskoeffizienten zu erhalten, die jeweiligen Spitzenpunkten und den Abtastintervallen zwischen den Spitzenpunkten gemäß der Amplitude entsprechen.

3.  System nach Anspruch 1, worin das Skalierungskoeffizientensequenz-Erzeugungsmodul (410) umfasst:

    eine Spitzenhalteeinheit (411), die mit dem Spitzenlöschungsmodul (310) verbunden ist und dazu konfiguriert ist, eine rechteckige Fensterfunktion für die Spitzenpunkte, die skaliert werden müssen, im IQ-Signal gemäß den endgültigen Spitzenwertabweichungskoeffizienten zu erzeugen;
    ein Kaskaden-CIC-Filter (412), das mit der Spitzenhalteeinheit (411) verbunden ist und dazu konfiguriert ist, die rechteckige Fensterfunktion in eine Ziel-Fensterfunktion zu formen, Korrekturkoeffizienten zu erhalten, die jeweiligen Spitzenpunkten gemäß der Ziel-Fensterfunktion entsprechen, und eine Korrekturkoeffizientensequenz zu bilden; und
    einen Addierer (413), der mit Kaskaden-CIC-Filter (412) verbunden ist und dazu konfiguriert ist, die Korrekturkoeffizientensequenz in die Skalierungskoeffizientensequenz umzuwandeln.

**4.** System nach Anspruch 3, worin die Spitzenhalteeinheit (411) einen Arbiter (4110), eine Vielzahl von Haltern (4111), die mit dem Arbiter (4110) verbunden sind, und einen Vergleicher (4112), der mit der Vielzahl von Haltern (4111) verbunden ist, umfasst;

der Arbiter (4110) ist dazu konfiguriert, Betriebszustände von jeweiligen Haltern (4111) zu lesen, wenn der endgültige Spitzenwertabweichungskoeffizient des Spitzenpunktes, der skaliert werden muss, empfangen wird, und den endgültigen Spitzenwertabweichungskoeffizienten an einen der Halter (4111) in einem Ruhezustand gegenwärtig zu verteilen; der Betriebszustand umfasst einen Aufrechterhaltungszustand und einen Ruhezustand;

der Halter (4111) ist dazu konfiguriert, den endgültigen Spitzenwertabweichungskoeffizienten zu empfangen, um den Aufrechterhaltungszustand einzugeben, und einen empfangenen endgültigen Spitzenwertabweichungskoeffizienten kontinuierlich auszugeben, um ein rechteckiges Fenster in einem Aufrechterhaltungszustand zu erzeugen; und

der Vergleicher (4112) ist dazu konfiguriert, rechteckige Fenster, die von jeweiligen Haltern (4111) ausgegeben werden, zu empfangen und die rechteckige Fensterfunktion gemäß einem Höchstwert von mehreren rechteckigen Fenstern zu erzeugen.

**5.** Verfahren zur Reduzierung eines Signalspitzenwert-zu-Mittelwert-Verhältnisses, umfassend:

Erhalten von Spitzenwertabweichungskoeffizienten, die jeweiligen Spitzenpunkten und Abtastintervallen zwischen den Spitzenpunkten in einem IQ-Signal entsprechen;

Bestimmen eines vorherigen Korrekturkoeffizienten eines vorherigen Spitzenwertabweichungskoeffizienten bei einem aktuellen Spitzenpunkt gemäß einem Abtastintervall zwischen einem vorherigen Spitzenpunkt und dem aktuellen Spitzenpunkt, und wobei der vorherige Spitzenwertabweichungskoeffizienten dem vorherigen Spitzenpunkt im IQ-Signal entspricht; Ändern eines Spitzenwertabweichungskoeffizienten des aktuellen Spitzenpunktes im IQ-Signal gemäß dem Spitzenwertabweichungskoeffizienten des aktuellen Spitzenpunktes und dem vorherigen Korrekturkoeffizienten, und Erzeugen eines endgültigen Spitzenwertabweichungskoeffizienten des aktuellen Spitzenpunktes, worin endgültige Spitzenwertabweichungskoeffizienten der Spitzenpunkte einer nach dem anderen erzeugt werden;

worin das Ändern des Spitzenwertabweichungskoeffizienten des aktuellen Spitzenpunktes im IQ-Signal gemäß dem Spitzenwertabweichungskoeffizienten des aktuellen Spitzenpunktes und dem vorherigen Korrekturkoeffizienten, und das Erzeugen des endgültigen Spitzenwertabweichungskoeffizienten des aktuellen Spitzenpunktes ferner umfasst:

Vergleichen des Spitzenwertabweichungskoeffizienten des aktuellen Spitzenpunktes und des vorherigen Korrekturkoeffizienten;

wenn der Spitzenwertabweichungskoeffizient des aktuellen Spitzenpunktes kleiner als oder gleich wie der vorherige Korrekturkoeffizient ist, Löschen eines Skalierens des aktuellen Spitzenpunktes; und

wenn der Spitzenwertabweichungskoeffizient des aktuellen Spitzenpunktes größer als der vorherige Korrekturkoeffizient ist, Ändern des Spitzenwertabweichungskoeffizienten gemäß dem vorherigen Korrekturkoeffizienten, und Erzeugen des endgültigen Spitzenwertabweichungskoeffizienten;

Erzeugen von Skalierungskoeffizienten, die jeweiligen Spitzenpunkten entsprechen, die gemäß den endgültigen Spitzenwertabweichungskoeffizienten skaliert werden müssen, und Bilden einer Skalierungskoeffizientensequenz, und

Skalieren des IQ-Signals gemäß der Skalierungskoeffizientensequenz, um einen Spitzenfaktor des IQ-Signals zu reduzieren.

**6.** Verfahren nach Anspruch 5, worin das Erzeugen von Skalierungskoeffizienten, die jeweiligen Spitzenpunkten entsprechen, die gemäß den endgültigen Spitzenwertabweichungskoeffizienten skaliert werden müssen, und das Bilden einer Skalierungskoeffizientensequenz umfasst:

Erzeugen einer rechteckigen Fensterfunktion für die jeweiligen Spitzenpunkte, die skaliert werden müssen, gemäß den endgültigen Spitzenwertabweichungskoeffizienten;

Formen der rechteckigen Fensterfunktion in eine Ziel-Fensterfunktion, und Erzeugen einer Korrekturkoeffizientensequenz gemäß der Ziel-Fensterfunktion; und

Umwandeln der Korrekturkoeffizientensequenz in die Skalierungskoeffizientensequenz.

**7.** Verfahren nach Anspruch 6, worin das Erzeugen einer rechteckigen Fensterfunktion für das IQ-Signal, das skaliert werden muss, gemäß den endgültigen Spitzenwertabweichungskoeffizienten umfasst:

Lesen von Betriebszuständen von jeweiligen Haltern, wenn der endgültige Spitzenwertabweichungskoeffizient des Spitzenpunktes, der skaliert werden muss, empfangen wird, und Verteilen des endgültigen Spitzenwertabweichungskoeffizienten an einen der Halter in einem Ruhezustand gegenwärtig; wobei der Betriebszustand einen Aufrechterhaltungszustand und einen Ruhezustand umfasst;

Empfangen, durch den Halter, des endgültigen Spitzenwertabweichungskoeffizienten, um den Aufrechterhaltungszustand einzugeben, und Ausgeben eines empfangenen endgültigen Spitzenwertabweichungskoeffizienten kontinuierlich, um ein rechteckiges Fenster in einem Aufrechterhaltungszustand zu erzeugen; und

Empfangen von rechteckigen Fenstern, die von jeweiligen Haltern ausgegeben werden, durch einen Vergleicher, und Erzeugen der rechteckigen Fensterfunktion gemäß einem Höchstwert von mehreren rechteckigen Fenstern.

8. Computerlesbares Speichermedium, in dem ein Computerprogramm gespeichert ist, **dadurch gekennzeichnet, dass** das Computerprogramm von einem Prozessor ausgeführt wird, um Schritte des Verfahrens nach einem der Ansprüche 5 bis 7 zu implementieren.

**Revendications**

1. Système destiné à réduire un rapport valeur de crête-valeur moyenne de signal, comprenant :

un module de retard (110) connecté à une borne d'entrée de signal IQ et configuré pour obtenir et mettre en mémoire cache un signal IQ qui est un signal de bande de base numérique ;

un module d'acquisition de crête (210) connecté à la borne d'entrée de signal IQ et configuré pour obtenir le signal IQ et obtenir des coefficients d'écart de crête correspondant à des points de crête respectifs et à des intervalles d'échantillonnage entre les points de crête selon le signal IQ ;

un module d'annulation de crête (310) connecté au module d'acquisition de crête (210) et configuré pour déterminer un coefficient de correction antérieur d'un coefficient d'écart de crête antérieur au niveau d'un point de crête actuel selon un intervalle d'échantillonnage entre un point de crête antérieur et le point de crête actuel, et le coefficient d'écart de crête antérieur correspondant au point de crête antérieur dans le signal IQ ; modifier un coefficient d'écart de crête du point de crête actuel dans le signal IQ selon le coefficient d'écart de crête du point de crête actuel et le coefficient de correction antérieur, et générer un coefficient d'écart de crête final du point de crête actuel, dans lequel les coefficients d'écart de crête finaux des points de crête sont générés un par un ;

dans lequel la modification du coefficient d'écart de crête du point de crête actuel dans le signal IQ en fonction du coefficient d'écart de crête du point de crête actuel et du coefficient de correction antérieur, et la génération du coefficient d'écart de crête final du point de crête actuel comprennent en outre :

la comparaison du coefficient d'écart de crête du point de crête actuel et du coefficient de correction antérieur ;

lorsque le coefficient d'écart de crête du point de crête actuel est inférieur ou égal au coefficient de correction antérieur, l'annulation d'une mise à l'échelle du point de crête actuel ; et

lorsque le coefficient d'écart de crête du point de crête actuel est supérieur au coefficient de correction antérieur, la modification du coefficient d'écart de crête en fonction du coefficient de correction antérieur, et la génération du coefficient d'écart de crête final ;

un module de génération de séquence de coefficients de mise à l'échelle (410) connecté au module d'annulation de crête (310) et configuré pour générer des coefficients de mise à l'échelle correspondant à des points de crête respectifs qui doivent être mis à l'échelle selon les coefficients d'écart de crête finaux, et former une séquence de coefficients de mise à l'échelle ; et

un module de mise à l'échelle (510) connecté au module de retard (110), au module de génération de séquence de coefficients de mise à l'échelle (410) et à une borne de sortie de signal IQ respectivement, et configuré pour mettre à l'échelle le signal IQ selon la séquence de coefficients de mise à l'échelle pour réduire un facteur de crête du signal IQ.

2. Système selon la revendication 1, dans lequel le module d'acquisition de crête (210) comprend :

une unité de calcul d'amplitude (211) connectée à la borne d'entrée de signal IQ et configurée pour recevoir le signal IQ et obtenir une amplitude du signal IQ ; et

une unité de reconnaissance de crête (212) connectée à l'unité de calcul d'amplitude (211) et configurée pour obtenir les coefficients d'écart de crête correspondant à des points de crête respectifs et les intervalles d'échantillonnage entre les points de crête selon l'amplitude.

3. Système selon la revendication 1, dans lequel le module de génération de séquence de coefficients de mise à l'échelle (410) comprend :

une unité de maintien de crête (411) connectée au module d'annulation de crête (310) et configurée pour générer une fonction de fenêtre rectangulaire pour les points de crête qui doivent être mis à l'échelle dans le signal IQ en fonction des coefficients d'écart de crête finaux ;

un filtre CIC en cascade (412) connecté à l'unité de maintien de crête (411) et configuré pour élaborer la fonction de fenêtre rectangulaire en une fonction de fenêtre cible, obtenir des coefficients de correction correspondant à des points de crête respectifs selon la fonction de fenêtre cible, et former une séquence de coefficients de correction ; et

un additionneur (413) connecté au filtre CIC en cascade (412) et configuré pour transformer la séquence de coefficients de correction en la séquence de coefficients de mise à l'échelle.

4. Système selon la revendication 3, dans lequel l'unité de maintien de crête (411) comprend un arbitre (4110), une pluralité d'unités de retenue (4111) connectées à l'arbitre (4110) et un comparateur (4112) connecté à la pluralité d'unités de retenue (4111) ;

l'arbitre (4110) est configuré pour lire des états de fonctionnement des unités de retenue respectives (4111) lors de la réception du coefficient d'écart de crête final du point de crête qui doit être mis à l'échelle, et distribuer le coefficient d'écart de crête final à l'une des unités de retenue (4111) actuellement dans un état inactif ; l'état de fonctionnement comprend un état de maintien et un état inactif ;

l'unité de retenue (4111) est configurée pour recevoir le coefficient d'écart de crête final pour entrer dans l'état de maintien, et produire en sortie un coefficient d'écart de crête final reçu en continu pour générer une fenêtre rectangulaire dans un état de maintien ; et

le comparateur (4112) est configuré pour recevoir des fenêtres rectangulaires produites en sortie par des unités de retenue respectives (4111), et générer la fonction de fenêtre rectangulaire selon une valeur maximale de plusieurs fenêtres rectangulaires.

5. Procédé de réduction d'un rapport valeur de crête-valeur moyenne de signal, comprenant :

l'obtention de coefficients d'écart de crête correspondant à des points de crête respectifs et à des intervalles d'échantillonnage entre les points de crête dans un signal IQ ;

la détermination d'un coefficient de correction antérieur d'un coefficient d'écart de crête antérieur au niveau d'un point de crête actuel selon un intervalle d'échantillonnage entre un point de crête antérieur et le point de crête actuel, et le coefficient d'écart de crête antérieur correspondant au point de crête antérieur dans le signal IQ ; la modification d'un coefficient d'écart de crête du point de crête actuel dans le signal IQ selon le coefficient d'écart de crête du point de crête actuel et le coefficient de correction antérieur, et la génération d'un coefficient d'écart de crête final du point de crête actuel, dans lequel les coefficients d'écart de crête finaux des points de crête sont générés un par un ;

dans lequel la modification du coefficient d'écart de crête du point de crête actuel dans le signal IQ en fonction du coefficient d'écart de crête du point de crête actuel et du coefficient de correction antérieur, et la génération du coefficient d'écart de crête final du point de crête actuel comprennent en outre :

la comparaison du coefficient d'écart de crête du point de crête actuel et du coefficient de correction antérieur ;

lorsque le coefficient d'écart de crête du point de crête actuel est inférieur ou égal au coefficient de correction antérieur, l'annulation d'une mise à l'échelle du point de crête actuel ; et

lorsque le coefficient d'écart de crête du point de crête actuel est supérieur au coefficient de correction antérieur, la modification du coefficient d'écart de crête en fonction du coefficient de correction antérieur, et la génération du coefficient d'écart de crête final ;

la génération de coefficients de mise à l'échelle correspondant à des points de crête respectifs qui doivent être mis à l'échelle en fonction des coefficients d'écart de crête finaux, et la formation d'une séquence de coefficients de mise à l'échelle ; et

la mise à l'échelle du signal IQ en fonction de la séquence de coefficients de mise à l'échelle pour réduire un facteur de crête du signal IQ.

**6.** Procédé selon la revendication 5, dans lequel la génération de coefficients de mise à l'échelle correspondant à des points de crête respectifs qui doivent être mis à l'échelle selon les coefficients d'écart de crête finaux, et la formation d'une séquence de coefficients de mise à l'échelle comprennent :

la génération d'une fonction de fenêtre rectangulaire pour les points de crête respectifs qui doivent être mis à l'échelle en fonction des coefficients d'écart de crête finaux ;
l'élaboration de la fonction de fenêtre rectangulaire en une fonction de fenêtre cible, et la génération d'une séquence de coefficients de correction en fonction de la fonction de fenêtre cible ; et
la transformation de la séquence de coefficients de correction en séquence de coefficients de mise à l'échelle.

**7.** Procédé selon la revendication 6, dans lequel la génération d'une fonction de fenêtre rectangulaire pour le signal IQ qui doit être mis à l'échelle selon les coefficients d'écart de crête finaux comprend :

la lecture d'états de fonctionnement des unités de retenue respectives lors de la réception du coefficient d'écart de crête final du point de crête qui doit être mis à l'échelle, et la distribution du coefficient d'écart de crête final à l'une des unités de retenue actuellement dans un état inactif, l'état de fonctionnement comprenant un état de maintien et un état inactif ;
la réception, par l'unité de retenue, du coefficient d'écart de crête final pour entrer dans l'état de maintien, et la production en sortie d'un coefficient d'écart de crête final reçu en continu pour générer une fenêtre rectangulaire dans un état de maintien ; et
la réception de fenêtres rectangulaires produites en sortie par des unités de retenue respectives par un comparateur, et la génération de la fonction de fenêtre rectangulaire selon une valeur maximale de plusieurs fenêtres rectangulaires.

**8.** Support de stockage lisible par ordinateur présentant un programme informatique stocké sur celui-ci, **caractérisé en ce que** le programme informatique est exécuté par un processeur pour mettre en œuvre les étapes du procédé selon l'une quelconque des revendications 5 à 7.

FIG. 1

FIG. 2

FIG. 3

16

FIG. 4

```
                    ┌─────────────────┐
                    │      Start      │
                    └─────────────────┘
                             │
                             ▼
          ┌──────────────────────────────────┐
          │   The prior peak deviation        │
          │   coefficient pk is preset to be   │
          │                0                   │
          └──────────────────────────────────┘
                             │
                             ▼
```

The prior peak deviation coefficient pk is preset to be 0

The peak deviation coefficient of the sampling point at current pin > 0

No → Next sampling point

Yes

An estimated correction coefficient E of the sampling point at current is calculated according to the prior peak deviation coefficient

The prior peak deviation coefficient is updated as pk =pout

E=pin

No → The output peak deviation coefficient is denoted as pout= pin-E or pout= pin

Yes

The output peak deviation coefficient is denoted as pout=0 (the peak scaling is cancelled)

FIG. 5

FIG. 6

FIG. 7

The peak deviation coefficient

Time / Sampling point

FIG. 8

FIG. 9

FIG. 10

FIG. 11

~1210

Obtaining peak deviation coefficients corresponding to respective peak points and sampling intervals between the peak points in an IQ signal

~1220

Modifying the peak deviation coefficients of the peak points in the IQ signal according to the peak deviation coefficients, the sampling intervals between the peak points, and a prior peak deviation coefficient corresponding to a prior peak point in the IQ signal, and generating final peak deviation coefficients

~1230

Generating scaling coefficients corresponding to respective peak points that need to be scaled according to the final peak deviation coefficients, and forming a scaling coefficient sequence

~1240

Scaling the IQ signal according to the scaling coefficient sequence to reduce a peak factor of the IQ signal

FIG. 12

**EP 3 944 580 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101834822 B